(19) Europäisches Patentamt
European Patent Office
Office européen des brevets

(11) Veröffentlichungsnummer: **0 002 455 B1**

(12) # EUROPÄISCHE PATENTSCHRIFT

(21) Anmeldenummer: **78101432.9**

(22) Anmeldetag: **22.11.78**

(51) Int. Cl.[3]: **C 07 C 103/32**, A 01 N 37/20

(54) **Acyloxyamide, Verfahren zu ihrer Herstellung sowie ihre Verwendung als Pflanzenwachstumsregulatoren**

(30) Priorität: **03.12.77 DE 2753945**

(43) Veröffentlichungstag der Anmeldung:
**27.06.79 Patentblatt 79/13**

(45) Bekanntmachung des Hinweises auf die Patenterteilung:
**26.11.80 Patentblatt 80/24**

(84) Benannte Vertragsstaaten:
**BE CH DE FR GB NL**

(56) Entgegenhaltungen:
**DE - A - 2 550 157**
**FR - A - 2 303 473**

**CHEMICAL ABSTRACTS, Vol.73, Nr. 23, 7.Dezember 1970, Zusammenfassung Nr. 120566t, Columbus, Ohio, USA, SAMARAI L.I. et al., "Reaction of carboxylic acid amidines with oxalyl chloride. III. 4,5-Imidazolinediones", Seite 374.**

(73) Patentinhaber: **BAYER AG**
**Zentralbereich Patente, Marken und Lizenzen**
**D - 5090 Leverkusen 1, Bayerwerk (DE)**

(72) Erfinder: **Beck, Gunther, Dr.**
**Am Mittelberg 9**
**D - 5090 Leverkusen (DE)**
**Heitzer, Helmut, Dr.**
**Hohenstrasse 84**
**D - 5090 Leverkusen 3 (DE)**
**Lürssen, Klaus, Dr.**
**August-Kierspel-Strasse 89**
**D - 5060 Berg.-Gladbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 002 455 B1

Acyloxyamide, Verfahren zu ihrer Herstellung sowie ihre Verwendung als Pflanzenwachstumsregulatoren

Die vorliegende Erfindung betrifft neue Acyloxyamide, mehrere Verfahren zu ihrer Herstellung sowie ihre Verwendung zur Beeinflussung des Pflanzenwachstums.

Es ist bereits bekannt geworden, daß (2-Chloräthyl)-trimethylammonium-chlorid pflanzenwuchsregulierende Eigenschaften aufweist (vgl. US-Patentschrift 3 156 554). Die Wirksamkeit dieses Stoffes ist jedoch, — vor allem bei niedrigen Aufwandmengen —, nicht immer ganz befriedigend.

Weiterhin ist bekannt geworden, daß ein unter der Bezeichnung "Off-Shoot-T"® im Handel befindliches Produkt auf Basis von Fettalkoholen mit 6, 8, 10 und 12 Kohlenstoffatomen zur Regulierung des Pflanzenwachstums, insbesondere zur Unterdrückung des Seitentriebwachstums bei Tabak eingesetzt werden kann (vgl. Farm. Chem. Handbook 1975, Meister Publishing Co., Willoughby, Ohio, 1975, Pesticide Dictionary D 147).

In manchen Fällen, vor allem bei niedrigen Aufwandmengen, läßt allerdings auch die Wirksamkeit dieses Produktes noch zu wünschen übrig.

Gegenstand der Erfindung sind neue Acyloxyamide der Formel

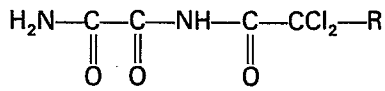

(I)

in welcher

R für Chlor, Alkyl mit 1 oder 2 Kohlenstoffatomen oder für Chloralkyl mit 1 oder 2 Kohlenstoffatomen und 1 bis 5 Chloratomen steht.

Gegenstand der Erfindung sind auch Verfahren zur Herstellung der Acyloxyamide der Formel (I). So erhält man die neuen Verbindungen der Formel (I) dadurch, daß man Imidazolidindion-Derivate der Formel

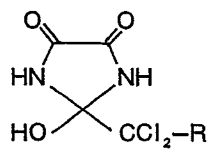

(II)

in welcher

R die oben angegebene Bedeutung hat,

a) einer Vakuum-Sublimation unterwirft, oder

b) in polaren Lösungsmitteln erhitzt.

Gegenstand der vorliegenden Erfindung ist ferner die Verwendung der Acyloxyamide der Formel (I) als Wirkstoffe zur Regulierung des Pflanzenwcahstums.

Die erfindungsgemäße Verbindung der Formel

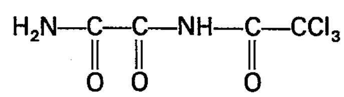

wurde irrtümlich bereits in Chemical Abstracts *73*, (1970) 120556 t (Khim. Geterotsikl. Soedin. *1970* (6), 814—818) erwähnt. Im einzelnen lautet der betreffende Artikel wie folgt:

"120566t Reaction of carboxylic acid amidines with oxalyl chloride. III. 4,5-Imidazolinediones. Samarai, L. I.; Bondar, V.A.; Derkach, G.I. (Inst. Org. Khim., Kiev, USSR). Khim. Geterotsikl. Soedin. 1970, (6), 814—8 (Russ). To a soln. or suspension of 0.05 mole amidine in 50 ml dry $CCl_4$ was added with cooling 0.055 mole oxalyl chloride in 30 ml $CCl_4$ and the whole was heated at 50—60° with stirring until evolution of HCl ceased to give the following I (R, m.p., and % yield given): 2,4-$Me_2$-$C_6H_3$ (II), 201°, 88; o-$MeOC_6H_4$, 177°, 91. To a suspension of

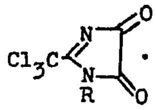

• HCl (II)

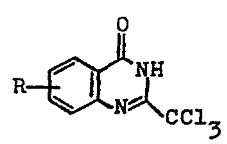

(III)

3.56 g II in 40 ml anhyd. ether was added dropwise with cooling 1.01 g $Et_3N$ in 15 ml ether to yield after 2 hr stirring 70% II-free base, m. 155°. By heating I (or free bases) at 200° were obtained the following III (R, m.p., and % yield given): 5- or 7-Me, 224—6°, 78; 6,8-$Me_2$, 235—6°, 69: 8-MeO, 251—2°, 69. A soln. of 0.01 mole I (or free base) in 30 ml $Me_2CO$ was treated with

0.01 mole $H_2O$ to give the following *$RCONHCOCONHR^1$ (R, $R^1$, m.p., and % yield given): $CCl_3$, H, 171°, 51; $CCl_3$, Me, 182—3°*, 78; $CCl_3$, Bu, 159—61°, 87; $CCl_3$, $Ph(CH_2)_2$, 168—70°, 81; $CCl_3$, Ph, 170—1°, 78; Ph, Ph, 226—8°, 84; Ph, $\alpha$-$C_{10}H_7$, 169—71°, 88. I (or free base) (0.01 mole) in 20 ml anhyd. EtOH was kept 2—3 hr to give the following $R^1OC(CCl_3)$:NCOCONHR (IV) or RN:C—$(CCl_3)$ $NHCOCO_2R^1$ (V) (type, R, $R^1$, m.p., and % yield given): IV Ph, Me (VI), 227°, 87; IV o-$MeOC_6H_4$, Me, 229°, 85; IV, p-$MeOC_6H_4$, Me, 247°, 96; IV, p-$ClC_6H_4$, Me, 270°, 94; IV, 2,4-$Me_2C_6H_3$, Me, 238°, 78; V, Me, Me (VII), 186—8°, 56; V, Bu, Me, 127—9°, 73; V, $CH_2Ph$, Me, 129—31°, 70; V, $CH_2Ph$, iso-Pr, 180—1°, 50; V, $Ph(CH_2)_2$, Me, 140—2°, 92. VI was also obtained in 39% yield by 2 hr-heating at 50—60° of 1.84 g oxalyl chloride and 1.76 g methyl trichloroacetimidate. VII was also obtained in 44% yield by addn. of 3.51 g N-methyltrichloroacetamidine in 20 ml $C_6H_6$ to a soln. of 1.23 g $MeO_2CCOCl$ in 15 ml $C_6H_6$ at 20° and 2 hr stirring. I (0.05 mole) in 20 ml $C_6H_6$ was treated while cooled with 0.1 mole amine in 15 ml $C_6H_6$ to yield the following RNHCOCON:$C(CCl_3)NHR^1$ (R, $R^1$, m.p., and % yield given): Me, Ph (IX), 243°, 65; Me, Ph (X), 173°, 73. To a soln. of 1.23 g $ClCOCO_2Me$ in 20 ml $C_6H_6$ was added with stirring a soln. of 4.75 g N-phenyltrichloroacetamidine in 25 ml $C_6H_6$ and the whole was stirred 1—2 hr at 20° to yield 52% $MeO_2CCON$:$C(CCl_3)$-NHPh (XI), M.96—8°. A soln. of 0.97 g XI in 20 ml MeOH was treated with 0.09 g $MeNH_2$ in 1 ml MeOH and the mixt. kept 12 hr at 20° to yield 54% IX. X was obtained in 59% by mixing 0.92 g $(COCl)_2$ in 20 ml $C_6H_6$ with 1.75 g N-methyltrichloroaeetamidine in 20 ml $C_6H_6$ and stirring the mixt. 40 min at 20°."

Die aufgeführte Verbindung, der die Formel

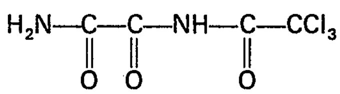
(A)

zugeordnet wird, ist nicht identisch mit der erfindungsgemäßen Verbindung (2), denn sie besitzt einen Schmelzpunkt von 171°C, während die zur Diskussion stehende erfindungsgemäße Verbindung bereits bei 101°C schmilzt (vgl. Beispiel 2). Außerdem wurde bei der Nacharbeitung der Synthese, die in dem genannten Chemical Abstracts-Artikel beschrieben ist, ein Produkt erhalten, dessen IR-Spektrum die gleichen Banden aufweist wie dasjenige der Verbindung der Formel

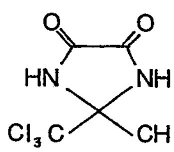
(B)

Die IR-Spektren der Substanzen der Formeln (A) und (B) hingegen unterscheiden sich ganz erheblich.

Daß dem Produkt, das beim Arbeiten nach der in dem Chemical Abstracts-Artikel beschriebenen Methode anfällt, tatsächlich die Struktur (B) und nicht (A) zukommt, konnte im übrigen durch $^{13}C$-Kernresonanz-Messung zweifelsfrei bewiesen werden. Das $^{13}C$-Spektrum, aufgenommen unter Protonen-Rauschentkopplung (PND) in ca. 63,1 Stunden, spricht nämlich mit nur 3 Signalen — davon nur 1 Signal für die Carbonyl-Funktion — sofort gegen die Struktur (A) und ist mit der Struktur (B) zwanglos in Einklang zu bringen. Die Carbonyl-Funktion von (B) gibt zu einem Signal bei $\delta = 159{,}78$ ppm (relativ zu TMS = 0) Anlaß.

Das Kohlenstoffatom der Trichlormethyl-Gruppierung absorbiert bei $\delta = 103{,}50$ ppm. Das noch verbleibende Kohlenstoffatom hat seine Resonanzstelle bei $\delta = 95{,}81$ ppm. Aceton-$D_6$ diente als Solvens und Deuteronen-Locksubstanz.

Aus den obigen Ausführungen folgt, daß auch die erfindungsgemäße Verbindung (2) neu ist, obwohl ihre Formel bereits publiziert wurde.

Überraschenderweise zeigen die erfindungsgemäßen Acyloxyamide der Formel (I) eine erheblich höhere pflanzenwuchsregulierende Wirkung als das aus dem Stand der Technik bekannte (2-Chloräthyl)-trimethylammonium-chlorid und das ebenfalls bekannte Produkt "Off-Shoot-T"®, welches anerkannt gut wirksame Stoffe gleicher Wikungsrichtung sind. Die erfindungsgemäßen Stoffe stellen somit eine wertvolle Bereicherung der Technik dar.

Verwendet man 2-Hydroxy-2-trichlormethyl-imidazolidin-4,5-dion als Ausgangsstoff, so kann der Reaktionsablauf sowohl im Falle des Verfahrens (a) als auch im Falle des Verfahrens (b) durch das folgende Formelschema wiedergegeben werden:

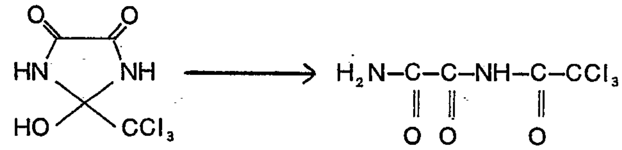

Die als Ausgangsstoffe benötigten Imidazolidindion-Derivate sind durch die Formel (II) allgemein definiert. In der Formel (II) steht R vorzugsweise für Chlor, Methyl, Chlormethyl, Dichlormethyl oder Trichlormethyl.

Als Beispiele für Verbindungen der Formel (II) seien im einzelnen genannt:
2-Hydroxy-2-trichlormethyl-imidazolidin-4,5-dion,
2-Hydroxy-2-(1,1-dichloräthyl)-imidazolidin-4,5-dion,
2-Hydroxy-2-(1,1-dichlorpropyl)-imidazolidin-4,5-dion,
2-Hydroxy-2-(1,1,2-trichloräthyl)-imidazolidin-4,5-dion,
2-Hydroxy-2-(1,1,2,2-tetrachloräthyl)-imidazolidin-4,5-dion,
2-Hydroxy-2-(1,1,2,2,2-pentachloräthyl)-imidazolidin-4,5-dion.

Die erfindungsgemäß verwendbaren Imidazolidindion-Derivate der Formel (II) sind bereits bekannt oder lassen sich nach im Prinzip bekannten Verfahren herstellen (vgl. DT—OS 2 550 157).

Bei der Durchführung des erfindungsgemäßen Verfahrens (a) erfolgt die Herstellung der Acyloxamide der Formel (I) dadurch, daß man Imidazolidindion-Derivate der Formel (II) einer Vakuum-Sublimation unterwirft. Der Druck kann hierbei innerhalb eines größeren Bereiches variiert werden. So ist es z.B. möglich, in dem von einer Wasserstrahlpumpe erzeugten Vakuum, also zwischen etwa 11 und 14 Torr, zu arbeiten. Vorzugsweise arbeitet man jedoch in einem Vakuum der Größenordnung $10^{-1}$ bis $10^{-2}$ Torr, wie es von einer Ölpumpe erzeugt wird. Selbstverständlich kann die Sublimation auch bei wesentlich kleineren Drucken durchgeführt werden. Die Grenzen nach niedrigen Drucken hin sind lediglich durch die Grenzen der Leistungsfähigkeit von Vakuumpumpen gesetzt.

Die Reaktionstemperaturen können bei dem Verfahren (a) in einem größeren Bereich variiert werden. Im allgemeinen arbeitet man bei Temperaturen zwischen 100°C und 250°C, vorzugsweise zwischen 150°C und 220°C.

Bei der Sublimation nach dem Verfahren (a) fallen die Verbindungen der Formel (I) im allgemeinen in relativ reiner Form an. Gegebenenfalls noch enthaltene Verunreinigungen lassen sich durch erneute Sublimation entfernen. Es ist jedoch in solchen Fällen auch möglich, die Verbindungen der Formel (I) mit Hilfe geeigneter Lösungsmittel zu extrahieren.

Bei der Durchführung des erfindungsgemäßen Verfahrens (b) erfolgt die Herstellung der Acyloxamide der Formel (I) dadurch, daß man Imidazolidindion-Derivate der Formel (II) 5 bis 50 Stunden in polaren Lösungsmitteln erhitzt. Als polare Lösungsmittel kommen hierbei alle üblichen inerten, polaren organischen Solvention in Frage. Hierzu gehören vorzugsweise Nitrile niederer aliphatischer Carbonsäuren, wie Acetonitril und Propionitril, ferner cyclische Äther wie Dioxan oder Tetrahydrofuran.

Die Reaktionstemperaturen können bei dem Verfahren (b) in einem größeren Bereich variiert werden. Im allgemeinen arbeitet man bei Temperaturen zwischen 50°C und 150°C, vorzugsweise zwischen 70°C und 120°C.

Bei der Durchführung des Verfahrens (b) setzt man auf 1 Gramm an Imidazolidindion-Derivat der Formel (II) im allgemeinen 2 bis 20 ml an polaren Lösungsmitteln ein. Die Isolierung der Verbindungen der Formel (I) erfolgt im allgemeinen dadurch, daß man nach beendeter Umsetzung das Lösungsmittel abdestilliert und den verbleibenden Rückstand gegebenenfalls umkristallisiert. Sind in den anfallenden Produkten neben den Acyloxamiden der Formel (I) auch nocht nicht umgesetzte Imidazolidindion-Derivate der Formel (II) enthalten, so lassen sich die Verbindungen der Formel (I) aus diesen Produkten mit siedend heißen cyclischen Kohlenwasserstoffen, wie Cyclohexan, Benzol oder Toluol, extrahieren. Die nicht umgesetzten Imidazolidindion-Derivate der Formel (II) bleiben als praktisch unlösliche Substanzen zurück.

Als Beispiele für die erfindungsgemäßen Acyloxyamide der Formel (I) seien im einzelnen genannt:
Trichloracetyl-oxamid,
2,2-Dichlorpropionyl-oxamid,
2,2,3-Trichlorpropionyl-oxamid,
2,2,3,3-Tetrachlorpropionyl-oxamid,
2,2,3,3,3-Pentachlorpropionyl-oxamid.

Die erfindungsgemäß verwendbaren Wirkstoffe greifen in den Metabolismus der Pflanzen ein und können deshalb als Wachstumsregulatoren eingesetzt werden.

Für die Wirkungsweise von Pflanzenwachstumsregulatoren gilt nach der bisherigen Erfahrung, daß ein Wirkstoff eine oder auch mehrere verschiedenartige Wirkungen auf Pflanzen ausüben kann. Die Wirkungen der Stoffe hängen im wesentlichen ab von dem Zeitpunkt der Anwendung, bezogen auf das Entwicklungsstadium des Samens oder der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in gewünschter Weise positiv beeinflussen.

Pflanzenwuchsregulierende Stoffe können zum Beispiel zur Hemmung des vegetativen Pflanzenwachstums eingesetzt werden. Eine derartige Wuchshemmung ist unter anderem bei Gräsern von wirtschaftlichem Interesse, denn durch eine Dämpfung des Graswachstums kann z.B. die Häufigkeit der Grasschnitte in Ziergärten, Parkund Sportanlagen oder an Straßenrändern reduziert werden. Von Bedeutung ist auch die Hemmung des Wuchses von krautigen und holzigen Pflanzen an Straßenrändern und in der Nähe von Überlandleitungen oder ganz allgemein in Bereichen, in denen ein starker Bewuchs unerwünscht ist.

Wichtig ist auch die Anwendung von Wachstumsregulatoren zur Hemmung des Längenwachstums bei Getreide, denn durch eine Halmverkürzung wird die Gefahr des Umknickens ("Lagerns") der Pflanzen vor der Ernte verringert oder vollkommen beseitigt. Außerdem können Wachstumsregulatoren bei Getreide eine Halmverstärkung hervorrufen, die ebenfalls dem Lagern entgegenwirkt.

Eine Hemmung des vegetativen Wachstums erlaubt bei vielen Kulturpflanzen eine dichtere Anpflanzung der Kultur, so daß ein Mehrertrag bezogen auf die Bodenfläche erzielt werden kann.

Ein weiterer Mechanismus der Ertragssteigerung mit Wuchshemmern beruht darauf, daß die Nährstoffe in stärkerem Maße der Blüten- und Fruchtbildung zugute kommen, während das vegetative Wachsstum eingeschränkt wird.

Mit Wachstrumsregulatoren läßt sich häufig auch eine Förderung des vegetativen Wachstums erzielen. Dies ist von grozßem Nutzen, wenn die vegetativen Pflanzenteile geerntet werden. Eine Förderung des vegetativen Wachstums kann aber auch gleichzeitig zu einer Förderung des generativen Wachstums führen, so daß z.B. mehr oder größere Früchte zur Ausbildung kommen.

Ertragssteigerungen können in manchen Fällen auch durch einen Eingriff in den pflanzlichen Stoffwechsel erreicht werden, ohne daß sich Änderungen des vegetativen Wachstums bemerkbar machen. Wachstumsregulatoren können ferner eine Veränderung der Zusammensetzung der Pflanzen bewirken, um so eine bessere Qualität der Ernteprodukte herbeizuführen. So ist es beispielsweise möglich, den Gehalt an Zucker in Zuckerrüben, Zuckerrohr, Ananas sowie Zitrusfrüchten zu erhöhen oder den Proteingehalt in Soja oder Getreide zu steigern.

Unter dem Einfluß von Wachstumsregulatoren kann es zur Ausbildung parthenokarper Früchte kommen. Ferner kann das Geschlecht der Blüten beeinflußt werden.

Mit Wachstumsregulatoren läßt sich auch die Produktion oder der Abfluß von sekundären Pflanzenstoffen positive beeinflussen. Als Beispiel sei die Stimulierung des Latexflusses bei Gummibäumen gennant.

Während des Wachstums der Pflanze kann durch Einsatz von Wachstumsregulatoren auch die seitliche Verzweigung durch eine chemische Brechung der Apikaldominanz vermehrt werden. Daran besteht z.B. Interesse bei der Stecklingsvermehrung von Pflanzen. Es ist jedoch auch möglich, das Wachstum der Seitentriebe zu hemmen, z.B. um bei Tabakpflanzen nach der Dekapitierung die Ausbildung von Seitentrieben zu verhindern und damit das Blattwachstum zu fördern.

Unter dem Einfluß von Wachstumsregulatoren kann der Balttbestand von Pflanzen so gesteuert werden, daß ein Entblättern der Pflanzen zu einem gewünschten Zeitpunkt erreicht wird. Eine derartige Entlaubung ist von Interesse, um eine mechanische Beerntung, z.B. bei Wein oder Baumwolle, zu erleichtern oder um die Transpiration zu einem Zeitpunkt herabzusetzen, an dem die Pflanze verpflanzt werden soll.

Durch Einsatz von Wachstumsregulatoren läßt sich der vorzeitige Fruchtfall verhindern. Es ist jedoch auch möglich, den Fruchtfall, — zum Beispiel bei Obst —, im Sinne einer chemischen Ausdünnung bis zu einem bestimmten Ausmaß zu fördern. Wachstumsregulatoren können auch dazu dienen, um bei Kulturpflanzen zum Zeitpunkt der Ernte die zum Ablösen der Früchte erforderliche Kraft zu vermindern, so daß eine mechanische Beerntung der Pflanzen ermöglicht beziehungsweise eine manuelle Beerntung erleichtert wird.

Mit Wachstumsregulatoren läßt sich ferner eine Beschleunigung oder auch eine Verzögerung der Reife des Erntegutes vor oder nach der Ernte erreichen. Dieses ist von besonderem Vorteil, weil sich dadurch eine optimale Anpassung an die Bedürfnisse des Marktes herbeiführn läßt. Weiterhin können Wachstumsregulatoren in manchen Fällen die Fruchtausfärbung verbessern. Darüberhinaus kann mit Hilfe von Wachstumsregulatoren auch eine zeitliche Konzentrierung der Reife erzielt werden. Damit werden die Voraussetzungen dafür geschaffen, daß z.B. bei Tabak, Tomaten oder Kaffee, eine vollständige mechanische oder manuelle Beerntung in nur einem Arbeitsgang vorgenommen werden kann.

Durch Anwendung von Wachstumsregulatoren kann auch die Samenoder Knospenruhe der Pflanzen, also die endogene Jahresrhythmik, beeinflußt werden, so daß die Pflanzen, wie z.B. Ananas oder Zierpflanzen in Gärtnereien, zu einem Zeitpunkt keimen, austreiben oder blühen, an dem sie normalerweise hierzu keine Bereitschaft zeigen.

Mit Wachstumsregualtoren kann auch erreicht werden, daß der Austrieb von Knospen oder die Keimung von Samen verzögert wird, z.B. um in frostgefährdeten Gebieten eine Schädigung durch Spätfröste zu vermeiden.

Wachstumsregualtoren können auch eine Halophilie bei Kulturpflanzen erzeugen. Damit werden die Voraussetzungen dafür geschaffen, daß eine Kultivierung von Pflanzen auf salzhaltigen Böden durchgeführt werden kann.

Mit Wachstumsregulatoren kann auch eine Frost- und Trockenresistenz bei Pflanzen induziert werden.

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brensätzen, wie Räucherpatronen, -dosen, -spiralen u.ä. sowie ULV-Kalt- und Warmnebel-Formulierungen.

Diese Formulierungen werden in bekannter Weise hergestellt, z.B. durch Vermischen der Wirkstoff mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnußschalen, Maiskolben und Tabakstengel; als Emulgier- und/oder schaumerzeugende Mittel: nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemäßen Wirkstoffe können in den Formulierungen in Mischung mit anderen bekannten Wirkstoffen vorliegen, wie Fungizide, Insektizide, Akarizide und Herbizide, sowie in Mischung mit Düngemitteln und anderen Wachstumsregulatoren.

Die Wirkstoffe können als solche, in Form ihrer Formulierungen oder der daraus bereiteten Anwendeungsformen, wie gebrauchsfertige Lösungen, emulsierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Begasen usw.

Es ist ferner möglich, die Wirkstoffe nach dem Ultra-Low-Volume, Verfahren auszubringen, Pflanzen oder Pflanzenteile mit der Wirkstoffzubereitung oder dem Wirkstoff selbst zu bestreichen oder die Wirkstoffzubereitung oder den Wirkstoff selbst in den Boden zu injizieren. Es kann auch das Saatgut der Pflanze behandelt werden.

Die Wirkstoffkonzentrationen können in einem größeren Bereich variiert werden. Im allgemeinen verwendet man pro Hektar Bodenfläche 0,01 bis 50 kg, bevorzugt 0,05 bis 10 kg an Wirkstoff.

Für die Anwendungszeit gilt, daß die Anwendung der Wachstumsregulatoren ein einem bevorzugten Zeitraum vorgenommen wird, dessen genaue Abgrenzung sich nach den Klimatischen und vegetativen Gegebenheiten richtet.

Die erfindungsgemäßen Verbindungen eignen sich nicht nur zur Regulierung des Pflanzenwachstums, sondern besitzen darüberhinaus auch eine herbizide Wirksamkeit.

In den nachfolgenden Beispielen wird die Aktivität der erfindungsgemäßen Stoffe als Wachstumsregulatoren dargestellt, ohne damit die Möglichkeit weiterer Anwendungen als Wachstumsregulatoren auszuschließen.

In den nachfolgenden beispielen werden die nachstehend angegebenen Verbindungen als Vergleichssubstanzen eingesetzt:

A = Off-Shoot-T®
(= Pflanzenwachstsumsregulator auf Basis von Fettalkoholen mit 6, 8, 10 und 12 Kohlenstoffatomen).

$$B = Cl—CH_2—CH_2—\overset{\oplus}{N}(CH_3)_3 \quad Cl^{\ominus}$$
(= 2-Chloräthyl-trimethylammoniumchlorid).

### Beispiel A

*Hemmung des Seitentriebwachstums bie Tabak*

Lösungsmittel: 30 Gewichtsteile Dimethylformamid
Emulgator: 1 Gewichtsteil Polyoxyäthylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Tabakpflanzen werden im Gewächshaus bis zur Entfaltung des 7. Laubblattes angezogen. In diesem Stadium werden die apikalen Vegetationsspitzen der Pflanzen entfernt und die Pflanzen tropfnaß mit den Wirkstoffzubereitungen besprüht. Nach 3 Wochen werden die Seitentriebe der Pflanzen herausgebrochen und gewogen. Das Gewicht der Seitentriebe der behandelten Pflanzen wird mit dem der unbehandelten Kontrollpflanzen verglichen.

Der erfindungsgemäße Wirkstoff 1 verursacht in diesem Test eine wesentlich bessere Hemmung des Seitentriebwachstums als die aus dem Stand der Technik bekannte Substanz A.

### Beispiel B

*Wuchshemmung bei Sojabohnen*

Lösungsmittel: 30 Gewichtsteile Dimethylformamid
Emulgator: 1 Gewichtsteil Polyoxyäthylen-Sorbitan-Monolaurat

Zur Herstellung einer zweckmäßigen Wirkstoffzubereitung vermischt man 1 Gewichtsteil Wirkstoff mid den angegebenen mengen Lösungsmittel und Emulgator und füllt mit Wasser auf die gewünschte Konzentration auf.

Sojabohnenpflanzen werden im Gewächshaus bis zur vollen Entfaltung des ersten Folgeblattes angezogen. In diesem Stadium werden die Pflanzen tropfnaß mit den Wirkstoffzubereitungen besprüht. Nach 3 Wochen wird der Zuwachs der Behandelten Pflanzen mit dem Zuwachs der unbehandelten Kontrollpflanzen verglichen.

Die erfindungsgemäßen Wirkstoffe 1 und 2 verursachen in diesem Test eine wesentlich stärkere Wuchshemmung als die aus dem Stand der Technik bekannte Substanz B.

### Beispiel C

*Wuchshemmung bei Baumwolle*

Lösungsmittel: 30 Gewichtsteile Dimethylformamid
Emulgator: 1 Gewichtsteil Polyoxyäthylen-Sorbitan-Monolaurat

Zur Herstellung einer zweckmäßigen Wirkstoffzubereitung vermischt man 1 Gewichtsteil Wirkstoff mit den angegebenen Mengen. Lösungsmittel und Emulgator und füllt mit Wasser auf die gewünschte Konzentration auf.

Baumwollpflanzen werden im Gewächshaus bis zur vollen Entfaltung des 5. Laubblattes angezogen. In diesem Stadium werden die Pflanzen tropfnaß mit den Wirkstoffzubereitungen besprüht. Nach 3 Wochen wird der Zuwachs der behandelten Pflanzen mit dem Zuwachs der unbehandelten Kontrollpflanzen verglichen.

Der erfindungsgemäße Wirkstoff 2 verursacht in diesem Test eine starke Wuchshemmung.

### Beispiel D

*Wuchshemmung bei Weizen*

Lösungsmittel: 30 Gewichtsteile Dimethylformamid
Emulgator: 1 Gewichtsteil Polyoxyäthylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Weizenpflanzen werden im Gewächshaus bis zum 2-Blatt-Stadium angezogen. In diesem Stadium werden die Pflanzen tropfnaß mit den Wirkstoffzubereitungen besprüht. Nach 3 Wochen wird der Zuwachs der behandelten Pflanzen mit dem Zuwachs der unbehandelten Kontrollpflanzen verglichen.

Die erfindungsgemäßen Wirkstoffe 1 und 2 verursachen in diesem Test eine wesentlich stärkere Wuchshemmung als die aus dem Stand der Technik bekannte Substanz B.

### Beispiel E

*Wuchshemmung bei Gerste*

Lösungsmittel: 30 Gewichtsteile Dimethylformamid
Emulgator: 1 Gewichtsteil Polyoxyäthylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Gerstepflanzen werden in Gewächshaus bis zum 2-Blatt-Stadium angezogen. In diesem Stadium werden die Pflanzen tropfnaß mit den Wirkstoffzubereitungen besprüht. Nach 3 Wochen wird der Zuwachs der behandelten Pflanzen mit dem Zuwachs der unbehandelten Kontrollpflanzen verglichen.

Die erfindungsgemäßen Wirkstoffe 1 und 2 verursachen in diesem Test eine wesentlich stärkere Wuchshemmung als die aus dem Stand der Technik bekannte Substanz B.

Beispiel F

*Wuchshemmung bei Gras* (Festuca pratensis)

Lösungsmittel: 30 Gewichtsteile Dimethylformamid
Emulgator: 1 Gewichtsteil Polyoxyäthylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Gras wird in 7 cm x 7 cm großen Kunststofftöpfen angezogen und bei einer Wuchshöhe von ca. 5 cm mit den Wirkstoffzubereitungen bis zum Abtropfen besprüht. Nach 3 Wochen wird der Zuwachs der behandelten Pflanzen mit dem Zuwachs der unbehandelten Kontrollpflanzen verglichen.

Die erfindungsgemäßen Wirkstoffe 1 und 2 verursachen in diesem Test eine wesentlich stärkere Wuchshemmung als die aus dem Stand der Technik bekannte Substanz B.

Herstellungsbeispiele

Beispiel 1

*Variante a:*

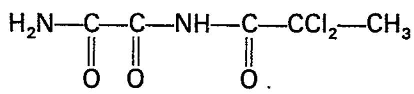

10 g 2-Hydroxy-2-(1,1-dichloräthyl)-imidazolidin-4,5-dion werden in einer Sublimationsapparatur bei etwa 0,1 Torr auf 180—200°C erhitzt. Nach 2—3 Stunden ist praktisch die gesamte Substanz sublimiert. Man erhält auf diese Weise 9 g (90% der Theorie) an 2,2-Dichlorpropionyl-oxamid, das nach Umkristallisieren aus wasserfreiem Cyclohexan in Form langer dünner Nadeln anfällt und einen Schmelzpunkt von 110°C aufweist.

Analyse: ($C_5H_6Cl_2N_2O_3$)

| | | | | | |
|---|---|---|---|---|---|
| Ber.: | 28,17% C; | 2,82% H; | 33,33% Cl; | 13,15% N; | 22,54% O |
| Gef.: | 28,1 % C; | 2,9 % H, | 33,6 % Cl, | 13,1 % N; | 21,9 % O |

Die Elementarzusammensetzung $C_5H_6Cl_2N_2O_3$ wird auch durch das Massenspektrum bestätigt.

Die wichtigsten IR-Banden (in $cm^{-1}$) sind (KBr-Preßling): 3390, 3335, 3220, 1783, 1713, 1700, 1433, 1420, 1400, 1140, 1100, 1065, 782, 750, 717, 645, 606.

*Variante b:*

1340 g 2-Hydroxy-2-(1,1-dichloräthyl)-imidazolidin-4,5-dion werden in 3 Liter Acetonitril etwa 20 Stunden unter Rückfluß (ca. 81°C) gerührt. nach dem Abkühlen auf 20°C wird von 12 g durch Hydrolyse entstandenem Oxamid abfiltriert und das Filtrat im Wasserstrahlvakuum zur Trockene einrotiert. Der Rückstand wird mehrere Stunden im Vakuumtrockenschrank bei 70°C/0,1 Torr gehalten, wobei einige Gramm durch Hydrolyse entstandene 2,2-Dichlorpropionsäure heraussublimieren. Als Rückstand verbleiben 1940 g an 2,2-Dichlorpropionyloxamid entsprechend 92,5% der Theorie. Die Eigenschaften der Substanz sind identisch mit denjenigen des nach der Variante (a) hergestellten Produktes.

Beispiel 2

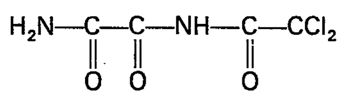

*Variante a:*

10 g 2-Hydroxy-2-trichlormethyl-imidazolidin-4,5-dion werden bei 0,05 Torr und Temperaturen zwischen 200—220°C sublimiert. Man erhält auf diese Weise 8 g (80% der Theorie) an Trichloracetyl-oxamid, das nach Umkristallisation aus Cyclohexan einen Schmelzpunkt von 101°C aufweist. Die Elementarzusammensetzung $C_4H_3Cl_3N_2O_3$ wird durch das Massenspektrum bestätigt.

Die wichtigsten IR-Banden (in $cm^{-1}$) sind (KBr-Preßling): 3418, 3385, 3335, 3250, 1795, 1741, 1697, 1515, 1490, 1390, 1350, 1150, 1090, 838, 810, 660, 590.

*Variante b:*

20 g 2-Hydroxy-2-trichlormethylimidazolidin-4,5-dion werden mit 300 ml Acetonitril etwa 10

Stunden unter Rückfluß gerührt. Anschließend wird das Reaktionsgemisch im Wasser-strahlvakuum zur Trockne einrotiert.

Das IR-Spektrum des Rückstandes zeigt an, daß ungefähr ein Drittel des Substanzgemisches aus Trichloroacetyloxamid besteht. Dessen Reinisolierung erfolgt durch Extraktion des Produktes mit siedendem, wasserfreiem Cyclohexan, aus dem es beim Erkalten auskristallisiert. Die Eigenschaften der Substanz sind identisch mit denjenigen des nach der Variante (a) hergestellten Produktes.

**Patenansprüche**

1. Acyloxamide der Formel

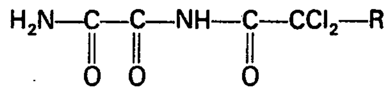

(I)

in welcher

R für Chlor, Alkyl mit 1 oder 2 Kohlenstoffatomen oder für Chloralkyl mit 1 oder 2 Kohlenstoffatomen und 1 bis 5 Chloratomen steht.

2. Verfahren zur Herstellung von Acyloxyamiden, dadurch gekennzeichnet, daß man Imidazolidindion-Derivate der Formel

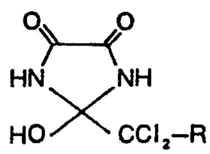

(II)

in welcher

R die oben angegebene Bedeutung hat,

a) einer Vakuum-Sublimation unterwirft, oder

b) in polaren Lösungsmitteln erhitzt.

3. Mittel zur Regulierung des Pflanzenwachstums, gekennzeichnet durch einen Gehalt an mindestens einem Acyloxamid gemäß Anspruch 1.

4. Verwendung von Acyloxamiden gemäß Anspruch 1 zur Regulierung des Pflanzenwachstums.

5. Verfahren zur Herstellung von pflanzenwachstumsregulierenden Mitteln, dadurch gekennzeichnet, daß man Acyloxamide gemäß Anspruch 1 mit Streckmitteln und/oder oberflächenaktiven Mitteln vermischt.

**Revendications**

1. Acyloxyamides de formule:

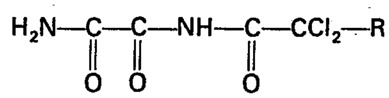

(I)

dans laquelle

R représente du chlore, un alcoyle ayant 1 ou 2 atomes de carbone ou un chloralcoyle ayant 1 ou 2 atomes de carbone et 1 à 5 atomes de chlore.

2. Procédé de fabrication d'acyloxyamides, caractérisé en ce que

a) on soumet des dérivés d'imidazolidine-dione de formule:

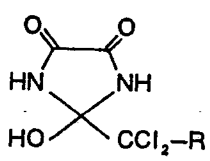

(II)

dans laquelle

R a la signification indiquée plus haut à une sublimation sous vide, ou

b) on les chauffe dans des solvants polaires.

3. Agent pour la régulation de la croissance des plantes, caractérisé par une teneur en au moins une acyloxyamide selon la revendication 1.

4. Utilisation d'acyloxyamides selon la revendication 1 pour la régulation de la croissance des plantes.

5. Procédé de production d'agents régulateurs de la croissance des plantes, caractérisé en ce qu'on mélange des acyloxyamides selon la revendication 1 avec des diluants et/ou des agents tensioactifs.

**Claims**

1. Acyloxamides of the formula

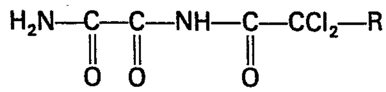 (I)

in which

R represents chlorine, alkyl with 1 or 2 carbon atoms or chloroalkyl with 1 or 2 carbon atoms and 1 to 5 chlorine atoms.

2. Process for the preparation of acyloxyamides, characterised in that imidazolidinedione derivatives of the formula

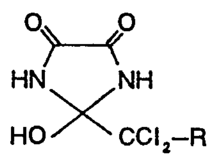 (II)

in which

R has the meaning indicated above,

a) are subjected to sublimation *in vacuo* or

b) are heated in polar solvents.

3. Composition for regulating plant growth, characterised in that it contains at least one acyloxamide according to Claim 1.

4. Use of acyloxamides according to Claim 1 for regulating plant growth.

5. Process for the preparation of plant-growth-regulating compositions, characterised in that acyloxamides according to Claim 1 are mixed with extenders and/or surface-active agents.